# EUROPEAN PATENT SPECIFICATION

(11) **EP 3 937 325 B1**
(45) Date of publication and mention of the grant of the patent: **16.04.2025**
(21) Application number: 21184200.0
(22) Date of filing: 07.07.2021
(51) Int. Cl.: H02H 9/00, H01C 7/10, H02H 9/04

(54) **APPARATUS AND METHOD FOR THE PREVENTION AND DAMPING OF VOLTAGE AND CURRENT PEAKS OF INTERNAL AND EXTERNAL ORIGIN FOR ELECTRODES OF MEDIUM, HIGH, VERY-HIGH VOLTAGE**
VORRICHTUNG UND VERFAHREN ZUR VERHINDERUNG UND DÄMPFUNG VON SPANNUNGS- UND STROMSPITZEN INTERNER UND EXTERNER HERKUNFT FÜR ELEKTRODEN MITTLERER, HOHER UND SEHR HOHER SPANNUNG
APPAREIL ET PROCÉDÉ POUR LA PRÉVENTION ET L'AMORTISSEMENT DES PICS DE TENSION ET DE COURANT D'ORIGINE INTERNE ET EXTERNE POUR LES ÉLECTRODES DE MOYENNE, HAUTE, TRÈS HAUTE TENSION

(30) Priority: 09.07.2020 IT 202000016699
(43) Date of publication of application: 12.01.2022
(73) Proprietor: Ingelva S.r.l., 21013 Gallarate (Varese) (IT)
(72) Inventor: DE BERNARDI, Davide, 21013 GALLARATE (VARESE) (IT); DE BERNARDI, Mario, 21013 GALLARATE (VARESE) (IT)
(74) Representative: Anselmi, Davide

(56) References cited:
- EP-A2- 1 058 366
- WO-A2-2013/044096
- IT-A1- VA 950 008
- US-A- 5 068 634
- US-A1- 2011 180 783
- US-A1- 2019 207 386

## Description

### TECHNICAL FIELD

The present invention relates to an apparatus and a method for the prevention and damping of voltage and current peaks of external and internal origin for medium, high, and very-high voltage power lines (electrical lines for energy transport) based on the detection and transformation of the electromagnetic energy at the origin of the overvoltages and overcurrents. The term "external and internal" refers to any electromagnetic stress such as shocks, electrical vibrations (of electric charges), pulses with steep fronts of atmospheric and terrestrial origin and alternating at frequencies above the fundamental (due to manoeuvres and resonances in line: harmonics).

In particular, the apparatus is connected in junction to medium voltage, high voltage and very-high voltage power lines both in alternating current (single-phase or polyphase) and in direct current.

Even more in detail, the apparatus is used for single-phase alternating-current power lines (for example, high-speed railway lines using voltages between 25-35 kV 50 Hz) or single-phase at railway 16.7 Hz or industrial 25.45.50.60 Hz frequencies, depending on the distribution lines (for foreign operators) and for direct-current power lines (such as those of railways from 3.6 kV to 3 kV) by connecting, on one side, to the conductor of the power line, and on the other side, to the earthing system (101), as described below.

### PRIOR ART

As is known, power lines (electrical lines) are generally structures which are highly at risk due to the intrinsic ability thereof to attract lightning and the large linear extension thereof on the territory.

Currently, the protection systems used to date are limited to diverting the energy of atmospheric overvoltages to the ground, with all the known harmful and destructive effects deriving therefrom.

In particular, such known protection systems include diverting any overvoltages towards an earthing system, thus damaging the environment. In addition, it should be noted that the currently known systems only intervene on the "tail" of a voltage and current pulse, therefore with a pulse already formed, without preventing such a dangerous situation.

The closest prior art document, IT VA 950 008 A1, discloses a surge damping and energy dissipation system which dampens surges and dissipates their energy for an electric line, comprising the series connection of a tuner and a damper to be connected between an electric line and ground. The tuner is a multi-range resonator, namely an element capable of determining the frequency threshold beyond which the damper intervenes by dampening the dangerous harmonics of overvoltage in the line and transforming their energy into heat.

### OBJECTS OF THE PRESENT INVENTION

In this situation, the object of the present invention is to realise an apparatus and a method for the prevention and damping of voltage and current peaks of external and internal origin for medium, high, and very-high voltage power lines (electrical lines).

It is in particular an object of the present invention to provide an apparatus and a method for the prevention and damping which allows to prevent the formation of such voltage and current peaks.

The indicated objects are substantially achieved by an apparatus according to claim 1 and a method according to claim 17.

### BRIEF DESCRIPTION OF THE FIGURES

Further features and advantages of the present invention will more greatly emerge from the detailed description which follows of some preferred but not exclusive embodiments of an apparatus and a method for the prevention and damping of voltage and current peaks illustrated in the appended drawings, in which:
- figure 1 illustrates, in top schematic view, an apparatus according to the present invention comprising three functional units;
- figure 2a illustrates, in front schematic view with tuning devices in section, the apparatus of figure 1 on the side of the tuning devices;

- figure 2b illustrates, in side schematic view, the apparatus of figure 1 from the side of the Antimpatto^{®} SCt earth block filter device;
- figure 3a illustrates, in front schematic view with damping devices in section, the apparatus of figure 1 on the side of the damping and harmonising devices;
- figure 3b illustrates, in side perspective view, the apparatus of figure 1 in which the tuning devices and the harmonising devices are seen;
- figure 3c illustrates, in side perspective view, the apparatus of figure 1 in which the tuning devices and the damping devices are seen;
- figures 4, 5a, 5b, 6a, 6b, 6c illustrate, in respective schematic views corresponding to those of figures 1, 2a, 2b, 3a, 3b, 3c, the apparatus according to the present invention comprising six functional units;
- figure 7 shows, in side schematic view, a detail of the apparatus according to the present invention relative to the harmonising device;
- figure 8 shows, in axonometric view with tuning devices and damping devices in section, the apparatus according to the present invention with three functional units;
- figure 9 shows, in axonometric view, a container of the apparatus according to the present invention;
- figures 10a, 10b, 10c show, in bottom view, different embodiments of a base panel of the support structure of the apparatus according to the present invention;
- figure 11 shows, in side axonometric view, the container of figure 9 at the short side;
- figures 12a, 12b, 12c, 12d illustrate, in front schematic view with tuning devices and damping devices in section, some examples of tuning and damping configurations for a first safety level;
- figure 13 shows, in front schematic view with tuning devices and damping devices in section, an example of tuning device and damping device configuration for a second safety level;
- figures 14a and 14b show, in front schematic view with tuning devices and damping devices in section, a first example of configurations for 30kV alternating current connections, respectively single-phase and three-phase; and
- figures 15a, 15b, 15c, show in respective top and side views with tuning devices and damping devices in section, a second configuration example for 30kV three-phase alternating current connection.

### DETAILED DESCRIPTION OF ONE OR MORE PREFERRED EMBODIMENTS OF THE PRESENT INVENTION

With reference to the figures cited, an apparatus for the prevention and damping of voltage and current peaks according to the present invention is indicated in its entirety by reference number 1.

As already stated, the apparatus 1, which comprises one or more functional units 2, is interposed, on one side, to the phase conductor(s) of the alternating current power line, to the conductor of the direct current power line (depending on the type and features of the power line) and, on the other, to the earthing system 101 as better specified below.

The various connection embodiments and the number of functional quantities connected to each other will be described below.

First of all, it must be defined that each functional unit 2 comprises the following elements connected in series:
- a tuning device 3;
- a damping device 4;
- a harmonising device 5 interposed between the tuning device 3 and the damping device 4.

The tuning device 3 comprises a pair of electrodes 3a, 3b of which one input 3a connected to a phase of said power line for receiving an electrical (voltage) signal, and one output 3b. In practice, the tuning device 3 is configured to realise a passage of the electrical signal between the two electrodes 3a, 3b only when the latter has a frequency exceeding a predetermined threshold (tuning frequency).

In particular, the tuning device 3 has an internal volume 6 interposed between the two electrodes 3a, 3b wherein a means is present comprising a suspension (incoherent, non-hygroscopic sediment) of particles of a piezoelectric and pyroelectric material (such as quartz, tourmalines, hemimorphites and the like) in the air.

The two electrodes 3a, 3b are preferably metallic and rod-shaped, provided with an "external" preferably spherical termination. Furthermore, the tuning device 3 comprises internal electrodes 6a, 6b with respect to said volume 6 and opposite ones which can have a spherical or hemispherical shape. Both internal electrodes 6a, 6b are provided with a regulation ring adjusted according to the nominal operating voltage of the line.

Each internal electrode 6a, 6b is mounted on a helical spring 7 adapted to allow oscillations of the ring itself with respect to the regulation position thereof during the operation of the apparatus 1.

The two internal electrodes 6a, 6b are contained inside a tube 8 of dielectric material, preferably transparent, for example Pyrex or quartz glass or the like, which defines said internal volume 6.

In practice, the tuning device 3 is a multigamma resonator, an element capable of determining the frequency threshold beyond which the damping device 4 intervenes as a function of the selected distance between the internal electrodes 6a, 6b.

The damping device 4 is connected to the output electrode 3b of the tuning device 3 and is configured to dissipate the energy load of said electrical signal. The output electrode 4b of the damping device 4 is connected to the earthing system 101 comprising the metallic support panel (dorsal 13, better described below) which serves as the earthing manifold (bar/node) of the apparatus 1. The metallic dorsal 13 is earth polarised by means of connection to the grounding system 101, preferably by interposed Antimpatto^{®} SCt earth block filter.

In particular, the damping device 4 has an electrically isolated internal volume 9 thereof and comprising a suspended mixture (incoherent, non-hygroscopic sediment), of particles of a piezoelectric, pyroelectric material, with possible integration of semiconductor (such as silicon carbide and the like) and, to complete the mixture, refractory inert material (such as dolomitic, marble grit and the like) and heat interception means immersed in said mixture adapted to disperse the heat produced by said energy load.

The damping device 4 also comprises two internal electrodes 9a, 9b inserted in the internal volume 6 and connected with external electrodes. Said damping device 4 comprises an inner casing 10, in which said internal volume 9 is defined, made of dielectric material preferably surrounded by an isolating layer of particles of a refractory material such as dolomitic sand and the like (electromagnetically inert).

Furthermore, in a median position with respect to the position of the two internal electrodes 9a, 9b, at least one metallic heat interception bar 11, for example a through-bolt of copper or other metal which crosses the bed of particles of piezoelectric, pyroelectric and refractory inert material, and is thermally coupled to a heat dissipation collar, for example, of copper sheet (or other metal) also called a radiator.

In practice, the damping device 4 is an energy dissipator, i.e., an element capable of absorbing, damping and dissipating the energy load of electromagnetic phenomena (electric shocks and vibrations or electric charges) which originate the overvoltages and overcurrents, the dangerous voltage and current peaks of external origin to the line, impulsive with a steep front, and internal to the line, alternated with higher frequencies of the fundamental and eminently at high frequency.

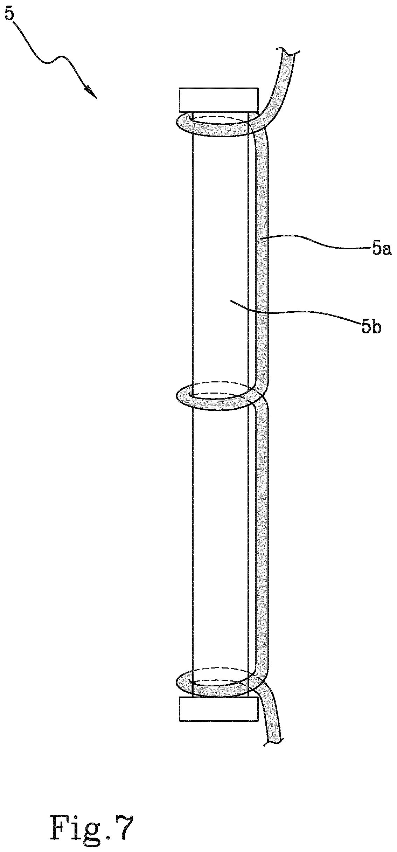

The harmonising device 5 is interposed between the tuning device 3 and the damping device 4 and is configured to realise a capacitive coupling therebetween. The harmonising device 5 comprises a coiled conductor 5a wound on a dielectric cylindrical support 5b, as depicted in figure 7 and as better described below.

In accordance with the present invention, the functional unit 2 is configured to dampen voltage and current pulses with a steep front so as to achieve a prevention of the formation of said voltage and current peaks. In particular, the tuning device 3 allows the passage to the damping device 4 of all the electrical signal frequencies (voltage) exceeding a certain threshold (that of the fundamental).

Advantageously, the apparatus 1 thus intervenes in the preventive sense already in the phase of formation of overvoltages and overcurrents, and only in limited cases in a repressive sense. In other words, the present invention cuts the "head" of the voltage pulse with a steep front (or of the high-frequency voltage half-wave), ensuring safety, absolute protection of the electrical systems, machinery and equipment constituting the power lines, with intrinsic and exclusive anti-blackout abilities, safeguarding people, animals, biomass in general and assets and also obtaining environmental health.

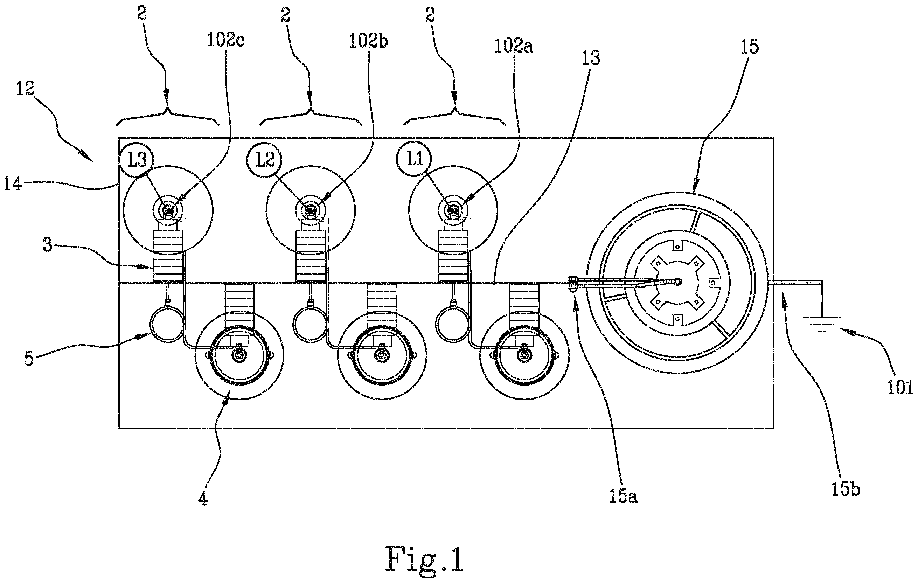

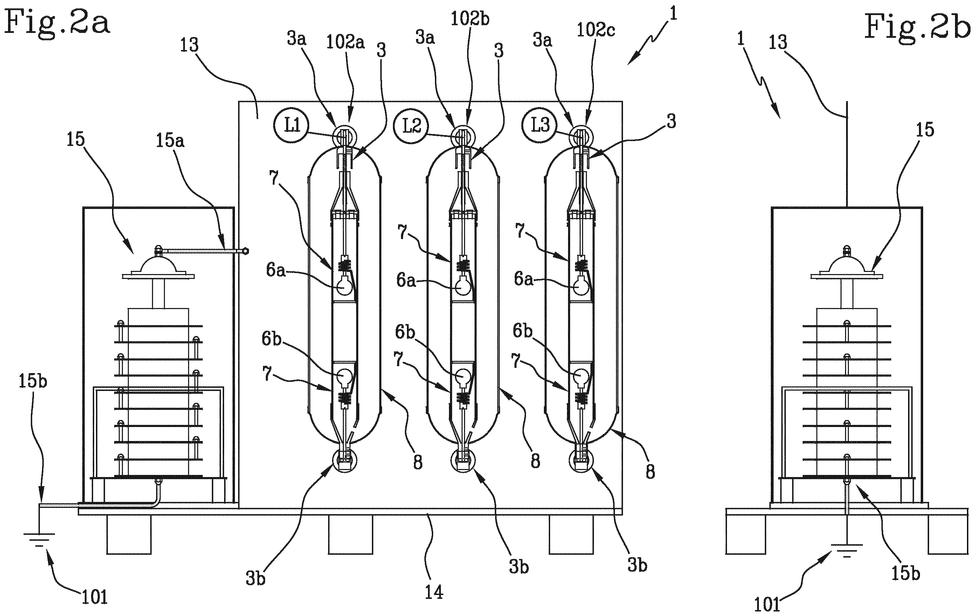

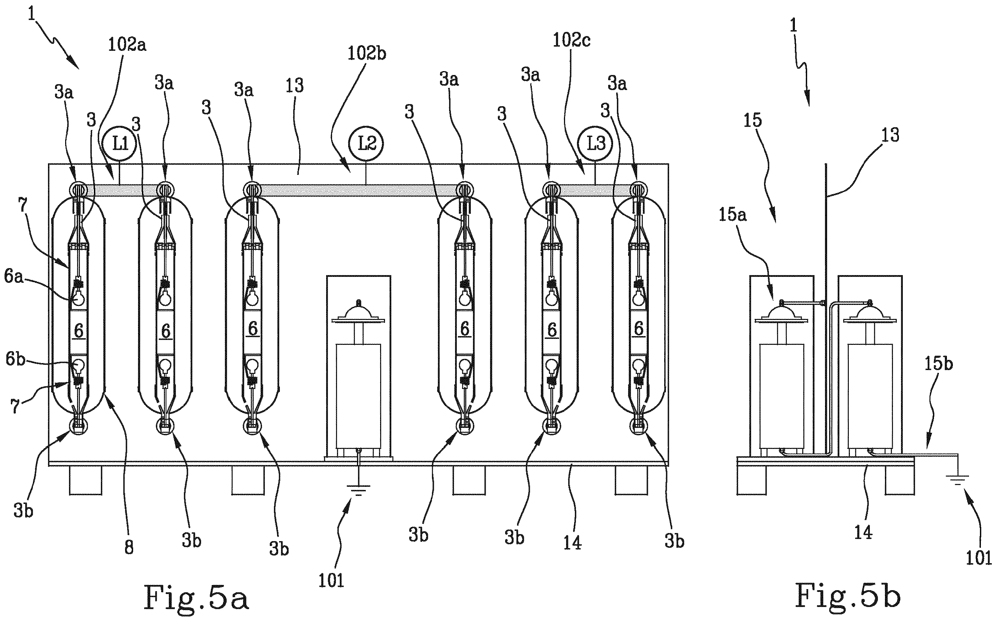

Figures 1 to 6c illustrate some possible connection embodiments between the functional units 2.

In particular, figures 1-3c illustrate a first embodiment in which there are three functional units 2 which ensure a safety level I for the three-phase alternating voltage line.

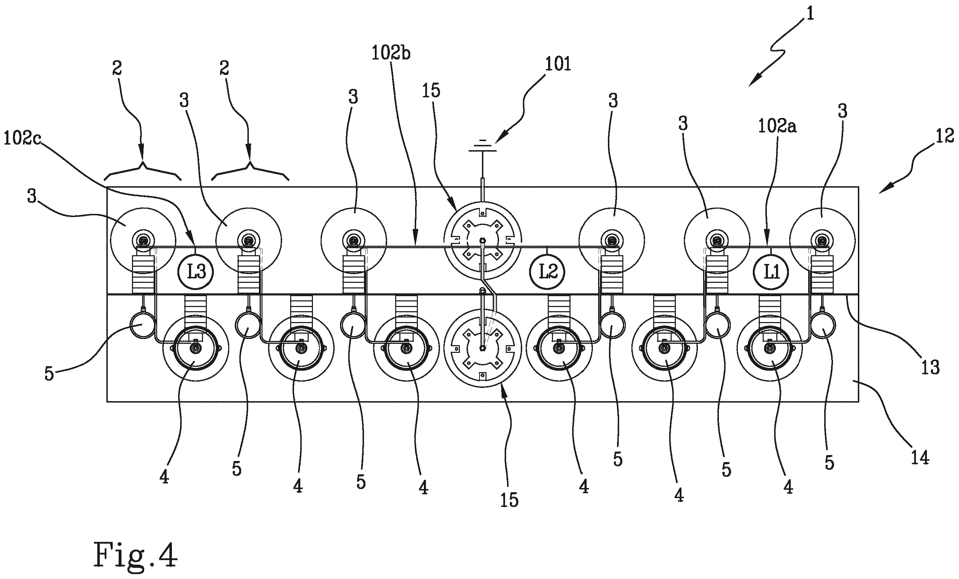

Figures 4-6c illustrate a second embodiment in which there are six functional units 2 which ensure a safety level II for the three-phase alternating voltage line.

In the first embodiment, the three functional units 2 are arranged in parallel with each other so that the input electrode of each tuning device 3 is connected to a respective phase of the power line and the output electrode of each damping device 4 is connected to the earthing system 101 of the cabin/station, preferably through the metallic dorsal 13, described below, which acts as an earth manifold (bar/node).

For example, in the case of three-phase alternating current, a first phase is connected to the tuning device of the first functional unit 2, a second phase is connected to the tuning device of the second functional unit 2, a third phase is connected to the tuning device of the third functional unit 2.

In the second embodiment, the six functional units 2 are connected in parallel with each other two by two so that the input electrodes of two tuning devices 3 are connected to a same phase and not to the others.

In other words, the tuning devices of two functional units 2 are connected together so as to define a first pair and so on.

For example, in the case of three-phase alternating current, a first phase is connected to the tuning devices of the first pair of functional units 2, a second phase is connected to the tuning devices of the second pair of functional units 2, a third phase is connected to the tuning devices of the third pair of functional units 2.

The apparatus 1 preferably comprises at least one Antimpatto^{®} SCt earth block filter 15 with strong radio frequency impedance connected between the output electrode of the damping device 4 and said earthing system 101. Preferably, such an earth block filter 15 is an Antimpatto^{®} SCt 300 kA or 500 kA earth block filter according to the different configurations.

In the case of the first embodiment, only one earth block filter 15 (Antimpatto^{®} SCt 500 kA) is used while in the case of the second embodiment two earth block filters 15 (Antimpatto^{®} SCt 300 kA) are used in series with each other as better explained below.

Furthermore, the apparatus 1 comprises a support structure 12 of said one or more functional units 2 having a dorsal panel 13 and a base panel 14.

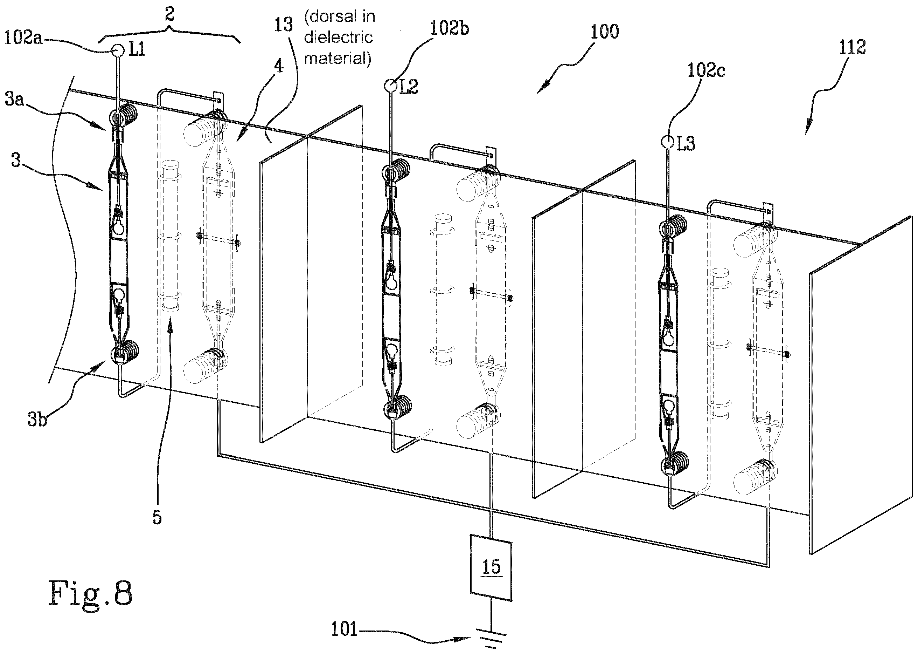

By way of example, the dorsal panel 13 and the base panel 14 may alternatively be made as follows:
- both in conductive material such as stainless steel or hot-galvanised iron of adequate thickness; or:
   - the dorsal panel 13 in dielectric material (as in the embodiment of figure 8), for example in shatterproof glass, and the base panel 14 in PVC or other equivalent polymer, both of adequate thickness. In this second case, the apparatus 1 comprises a special earth manifold electrically connected to the functional unit(s) 2.

The dorsal panel 13 and the base panel 14 are arranged orthogonally to each other so as to form a substantially inverted "T" structure.

As can be seen in the accompanying figures, the tuning device 3 and the damping device 4 are arranged on the opposite sides of the dorsal panel 13. Furthermore, the harmonising device 5 is also arranged on the same side as the damping device 4.

This applies for all the illustrated embodiments in which there are a plurality of functional units 2.

Preferably, the dorsal panel 13 is configured like a grid and has a plurality of through holes through which the connection of the tuning device 3 to the damping device 4 is realised.

The tuning devices 3 and damping devices 4 are arranged along an extension direction of said dorsal panel 13 (vertically), on opposite sides and parallel with each other. However, each tuning device 3 is (vertically) staggered with respect to the damping device 4 to which it is connected.

The harmonising devices 5 are arranged along the extension of said dorsal panel 13 (vertically) parallel with each other. Furthermore, each harmonising device 5 is arranged substantially aligned (vertically) with respect to an orthogonal (vertical) plane which intersects the dorsal panel 13 at the tuning device 3.

Furthermore, the dorsal panel 13 is preferably made of electrically conductive metallic material so as to act as an earth manifold (bar/node) and is earth polarised by means of connection to the earthing system 101 of the cabin/station, preferably by interposed Antimpatto^{®} SCt earth block filter 15.

In exceptional cases, the dorsal panel 13 can be connected to a dedicated Antimpatto^{®} earthing circuit with strong radio frequency impedance.

The input electrode 3a of the tuning device 3 is mechanically connected by means of a suitable insulator to said metallic dorsal panel 13.

The output electrode 3b of the tuning device 3 (located at a lower support of the dielectric cylinder of the coiled conductor of the harmonising device 5, but on the opposite side of the dorsal panel 13) is mechanically joined to the dorsal panel 13 by means of a dedicated isolator.

The output electrode 3b of the tuning device 3 is connected to the input electrode 4a of the damping device 4 (provided with a suitable metallic collar and mechanically joined to the metallic dorsal with a dedicated isolator) by means of the harmonising device 5 (for example consisting of a conductor FS17 1 G 35 wound, in three coils, on a dedicated cylindrical support of dielectric material preferably having a diameter of 8-9 cm, for example of Pyrex or quartz glass or the like, with a pitch of 40 cm, making the conductor carry out a complete circumference circle). The output electrode 4b of the damping device 4 is instead electro-mechanically connected to the metallic dorsal panel 13, with suitable metallic collar and support.

It should be noted that, according to the dorsal panel 13, the output electrode 3b of the tuning device 3 faces the opposite direction with respect to that towards which the input electrode 4a of the damping device 4 faces.

For example, following the vertical orientation, the output electrode 3b of the tuning device 3 is arranged at the bottom, while the input electrode 4a of the damping device 4 is arranged at the top. The harmonising device 5 is between the two.

The vertical orientation of the tuning device 3 and the damping device 4 is important for the correct effectiveness and operation of the incoherent material contained therein.

In the first embodiment (safety level I) the dorsal panel 13 is connected to the earthing system 101 of a cabin/station by the interposed Antimpatto^{®} SCt earth block filter.

Following the cascade, the dorsal panel 13, which acts as an earth manifold (node/bar), is connected by means of two conductors, parallel to each other, to the terminal of the input electrode 15a of the earth block filter 15 (SCt 500 kA).

The terminal of the output electrode 15b of the earth block filter 15 (SCt 500 kA) is provided for the connection to the cabin/station earthing system 101 or to a dedicated Antimpatto^{®} earthing circuit with strong radio frequency impedance.

Also in the second embodiment (safety level II) the dorsal panel is connected to the earthing system 101 of the cabin/station by interposed Antimpatto^{®} SCt earth block filter.

Following the cascade, the dorsal panel 13, which acts as an earth manifold (node/bar), is connected by means of two conductors (each FS17 1 G 95) parallel to each other, to the terminal of the input electrode 15a (upper) of the earth block filter 15 (SCt 300 kA) on the side of the damping devices 4.

The terminal of the output electrode 15b (lower) of the earth block filter 15 (SCt 300kA) arranged on the side of the damping devices 4 is connected by means of two conductors (each FS17 1 G 95) to the terminal of the input electrode 15a (upper) of the earth block filter 15 (SCt 300 kA) on the side of the tuning devices. The terminal of the output electrode 15b of the earth block filter 15 (SCt 300 kA) on the side of the tuning devices 3 is designed for connection to the cabin/station earthing system 101 or to a dedicated Antimpatto^{®} earthing circuit with strong (radio frequency) impedance.

It should be noted that all the devices (tuning devices 3, damping devices 4 and earth block filters 15) except the harmonising device 5 are encapsulated (i.e., wrapped in dedicated capsules of transparent, antishock dielectric material).

It should be noted that such an encapsulation may include two embodiments:
- total capsule which also incorporates the terminals of the electrodes 3a, 3b of each of the tuning devices 3 and/or of each of the electrodes 4a, 4b of the damping devices 4;
- partial capsule which does not incorporate the aforementioned terminals, but an integration is included by means of covering caps of electrical insulating material (dielectric) of such electrodes (the variant with caps is not depicted in the accompanying figures). Preferably, each cap is made of closed-cell rubber or electrical insulating material (dielectric) with equivalent features and of adequate thickness.

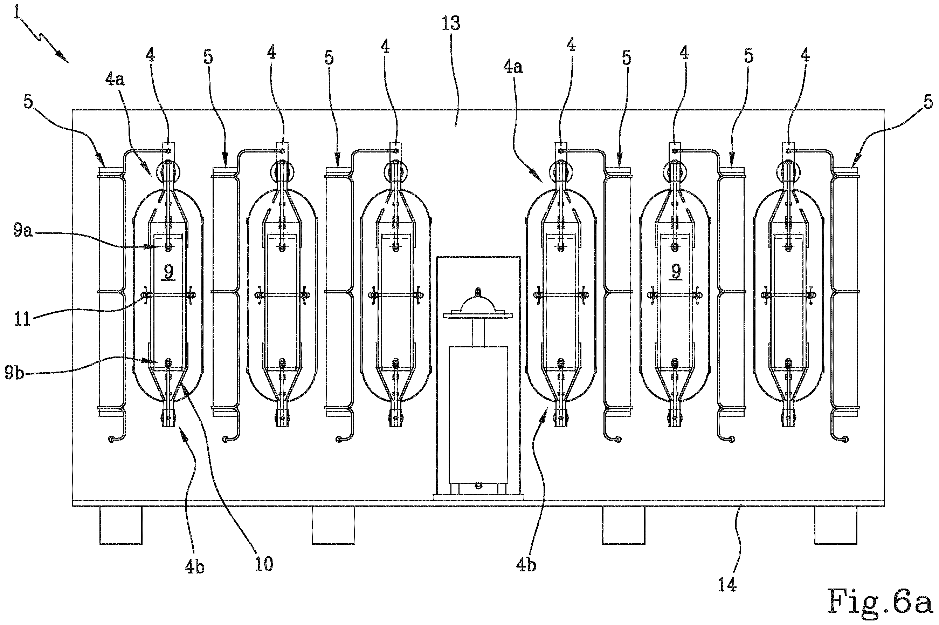

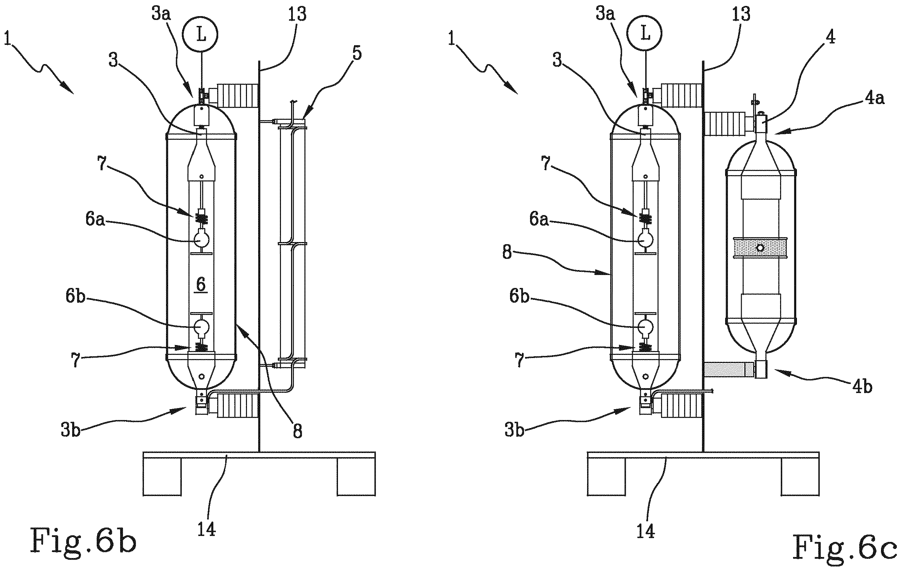

With reference to figure 6, the metallic base panel 14 (horizontal) is made of stainless steel (or in the alternative in hot-galvanised iron) of adequate thickness and is in turn facing below and firmly joined to an insulating panel of similar dimensions (width and length) and of adequate thickness made of dielectric material (PVC or other equivalent polymer).

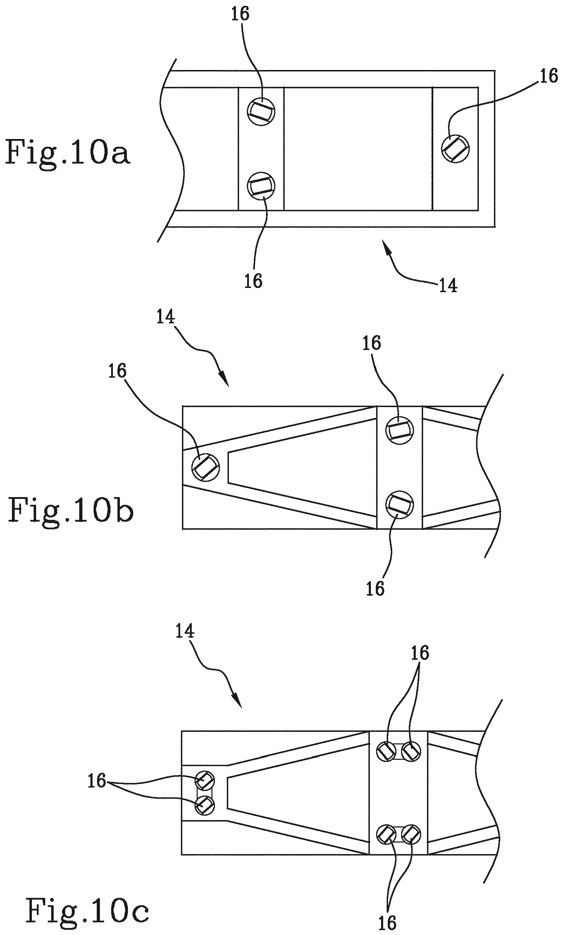

Below such a base panel 14, a suitable supporting structure is made of dielectric material on pivoting wheels 16 (of adequate dimensions and mechanical features), as in the three options indicated in figures 10a, 10b, 10c); solutions of greater adaptation to possibly not perfectly level floors.

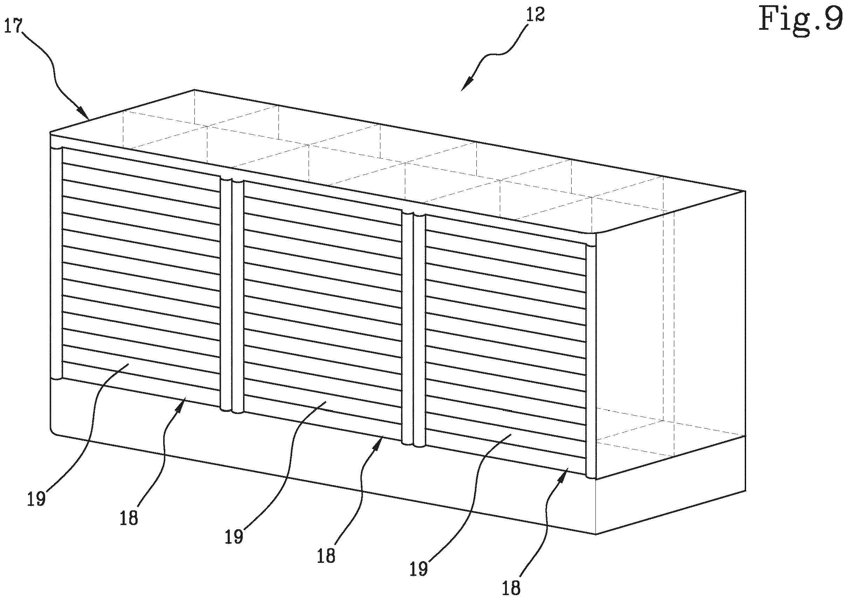

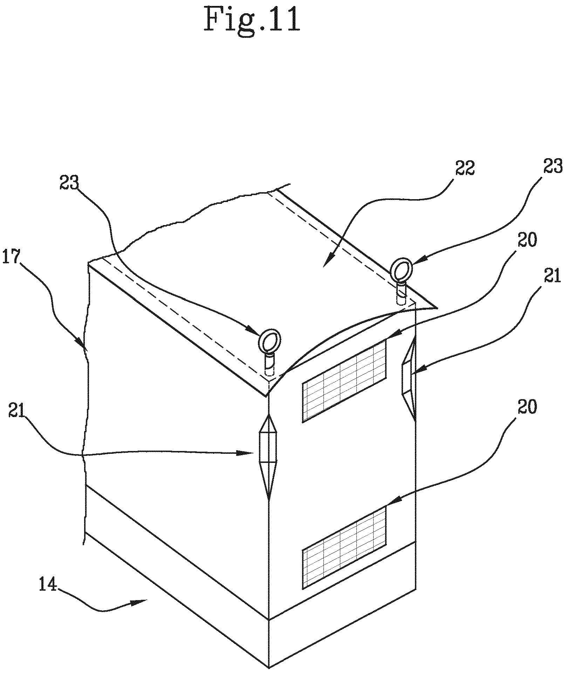

With reference to figure 9 and 11, it can be seen that the apparatus 1 comprises a casing 17 which encloses the load-bearing structure preferably made of sheet metal.

In figure 9, internal dividers in dielectric material have been depicted by means of dashed lines for a possible embodiment in which the internal space of the casing 17 is divided into cavities.

Such a casing 17 is preferably provided with four uprights per side, and three windows 18 per side provided with shutter closures 19 to allow inspection and maintenance operations. The shutters 19 are also provided with a lockable closure.

On either side of the minor axis the casing 17 is provided with adequate air intakes 20 at the base and at the head, filtered and waterproof.

The casing 17 is also provided with four ergonomic handles 21 (of which only two are visible in figure 11) at an adequate height obtained in low relief at the four edges of the peripheral uprights.

The top 22 of the casing 17 is shaped with winged ribs and thermally insulated in the gap with fireproof material, to cope with atmospheric agents in the case of installation in an open area and without covers.

The casing 17 as a whole is firmly, metallically, hermetically constrained to the perimeter of the base panel 14 by means of special bolts and nuts equally distributed (to the four corners of the base and to the four bases of the intermediate uprights) and provided with seals.

Above the casing 17 and at the corners there are preferably coupling rings 23 for the possible lifting of the entire structure.

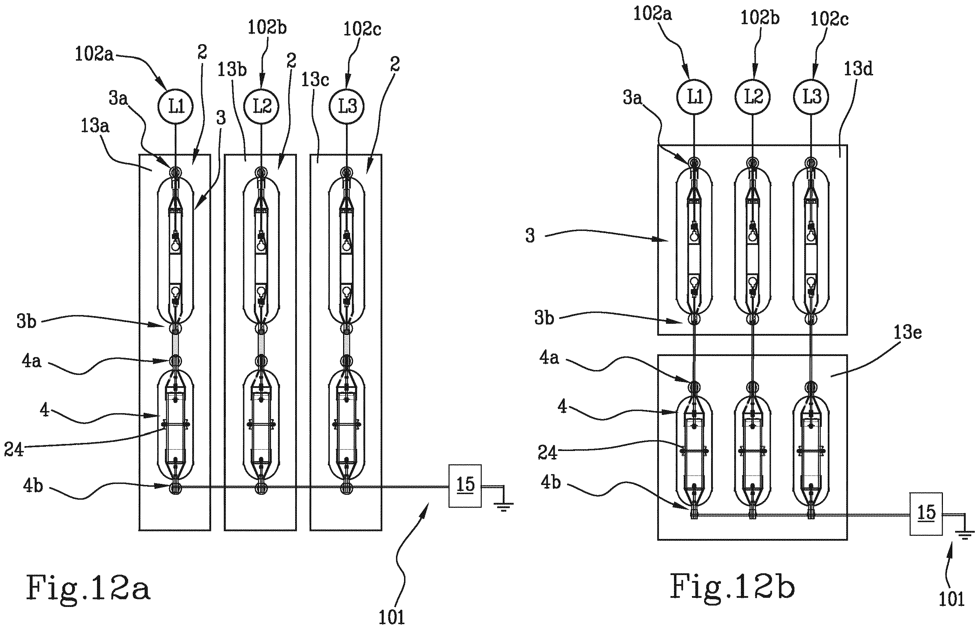

Various configurations of the apparatus 1 according to the present invention have been depicted in figures 12a to 15c. In particular, such configurations are linked to different positions of the tuning devices 3 and the damping devices 4 with respect to the dorsal panel 13 also made in different shapes.

In detail, figures 12a-12d depict four configurations of the apparatus 1 according to a first level of protection in which there are three functional units 2 each consisting of a tuning device 3 in series with a damping device 4. In each configuration, the input electrode 3a of each tuning device 3 is connected to a respective phase of the power line, while the output electrode 3b of each tuning device 3 is connected to the input electrode 4a of the damping device 4. The output electrodes 4b of each damping device 4 are connected to the earthing system 101, preferably by interposed Antimpatto^{®} SCt earth block filter 15.

Such different configurations involve the functional units just mentioned being arranged as follows:
- in figure 12a each functional unit 2 of devices 3, 4 is mounted on a respective dorsal panel 13 separated from the others so as to obtain three dorsal panels 13a, 13b, 13c (horizontally) separated from each other and arranged side by side; or
- in figure 12b the tuning devices 3 of each functional unit 2 are mounted on a single common dorsal panel 13d and separated by another single dorsal panel 13e on which the damping devices 4 are mounted so as to obtain two dorsal panels 13d, 13e (vertically) separated from each other; or

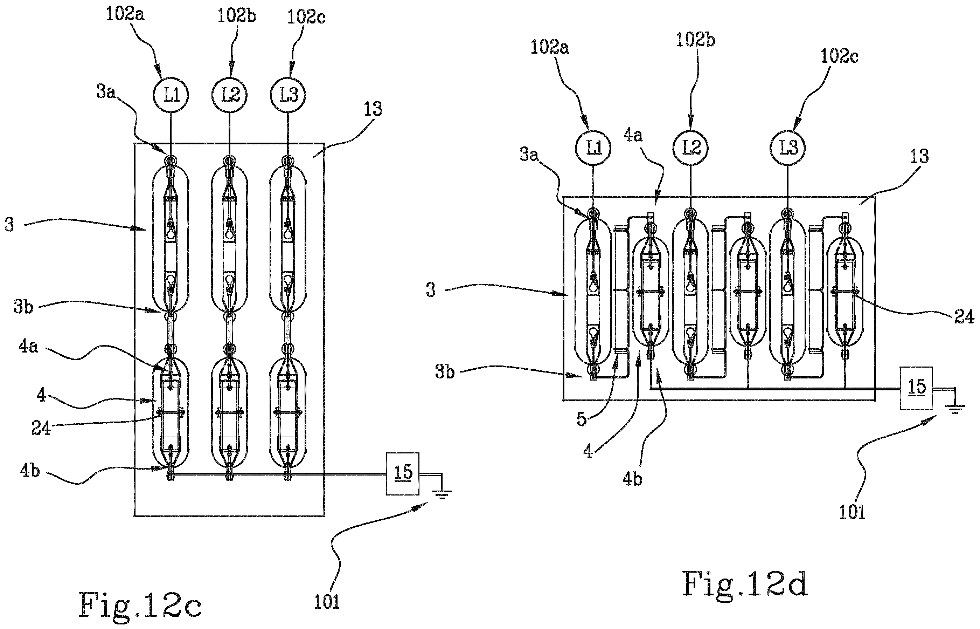

- in figure 12c, all the functional units 2 of devices 3, 4 are mounted on a single dorsal panel 13.

The three configurations mentioned above (depicted in figures 12a-12c) involve the devices 3, 4 of each functional unit 2 being arranged along a longitudinal direction (vertically superimposed).

The configuration depicted in figure 12d involves all the functional units 2 of devices 3, 4 being mounted on a single dorsal panel 13, but the devices 3, 4 of each pair are arranged side by side (with respect to a vertical direction).

Furthermore, in the configuration of figure 12d the harmonising devices 5 are also present, each interposed between a respective tuning device 3 and a respective damping device 4 as previously described.

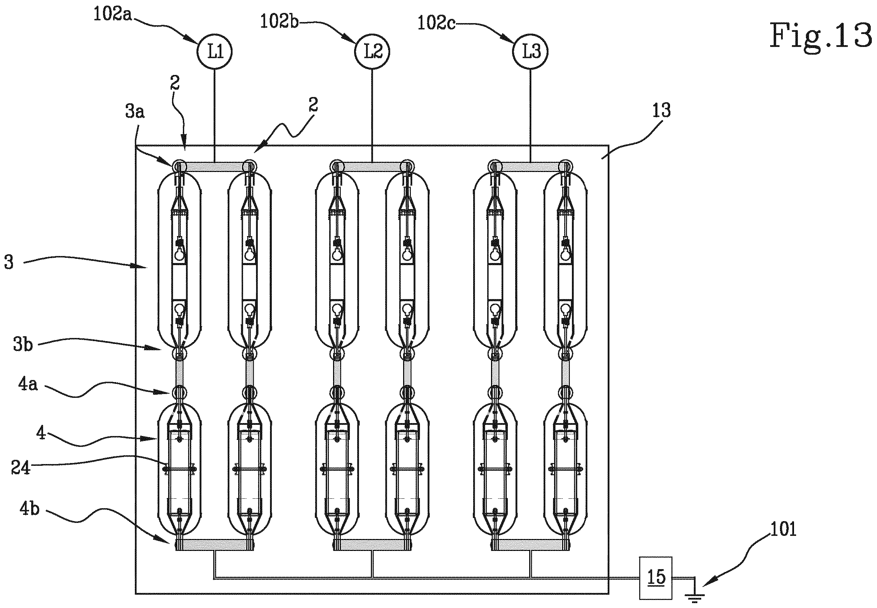

Figure 13 depicts a further configuration of the devices relative to a safety level II in which there are six functional units 2 connected in parallel with each other two by two so that the input electrodes of two tuning devices 3 are connected to a same phase and not to the others. Such functional units 2 are mounted on the same dorsal panel 13.

With respect to the configuration depicted in figures 1 to 6c and 8 and previously described in detail, the five alternative configurations mentioned above (depicted in figures 12a-12d and 13) involve the devices 3, 4 of the functional units 2 being arranged on the same face of the dorsal panel 13.

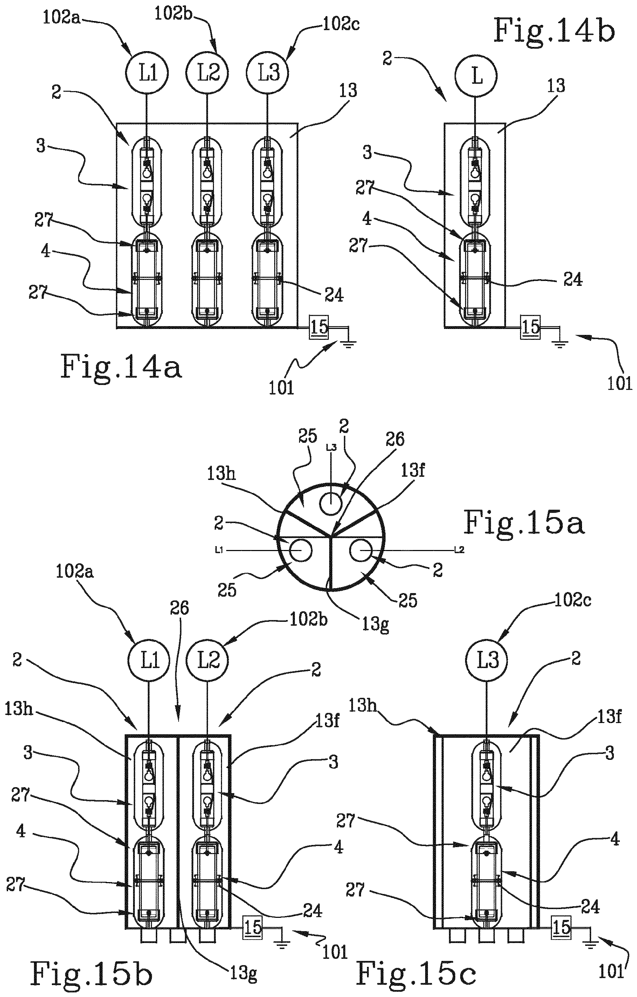

The configurations depicted in figures 14a to 15c are preferably dedicated to the use of the apparatus 1 with nominal operating voltages of the power line at 30kV. In any case, it should be noted that the configurations described above can also be used with similar voltages.

In detail, figures 14a and 14b respectively show three functional units 2 or a functional unit 2 connected on the same face of a single dorsal panel 13 in which the ends 27 of the damping devices 4 have a single cylindrical profile and without a cone connection as in the other configurations.

In figures 15a, 15b and 15c, another alternative configuration is depicted with a triangular arrangement preferably dedicated to the use of the apparatus 1 with nominal operating voltages of the three-phase alternating current power line at 30kV.

In detail, as can be seen from the top view of figure 15a, each functional unit 2 is arranged in a respective angular sector 25 around a central extension axis 26. Therefore, the dorsal panel 13 comprises three portions 13f, 13g, 13h in which each portion defines said angular sector 25 in which a respective functional unit 2 is arranged.

From the top, the structure assumes a "star" or "Y" configuration as is clearly depicted in the accompanying figures 15a, 15b, 15c.

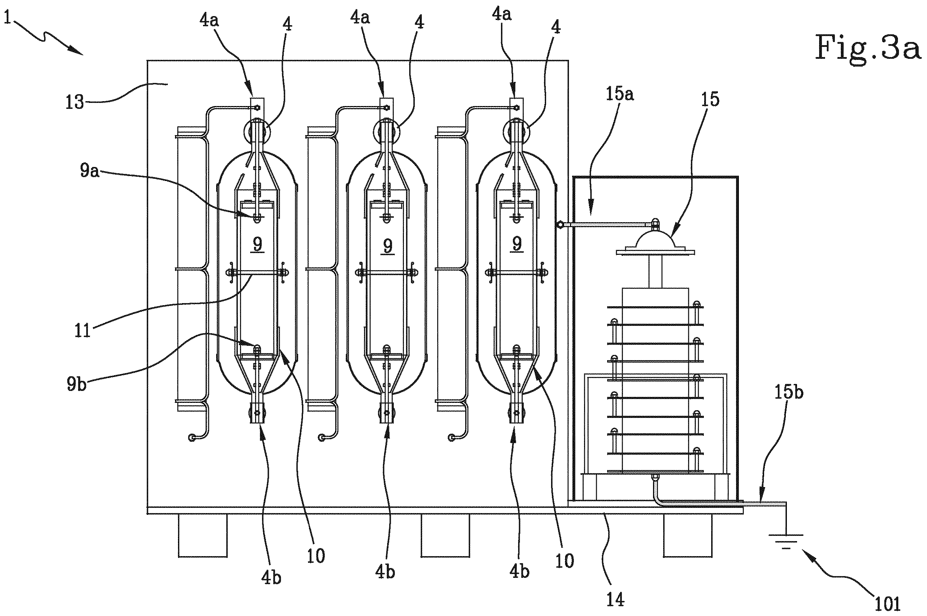

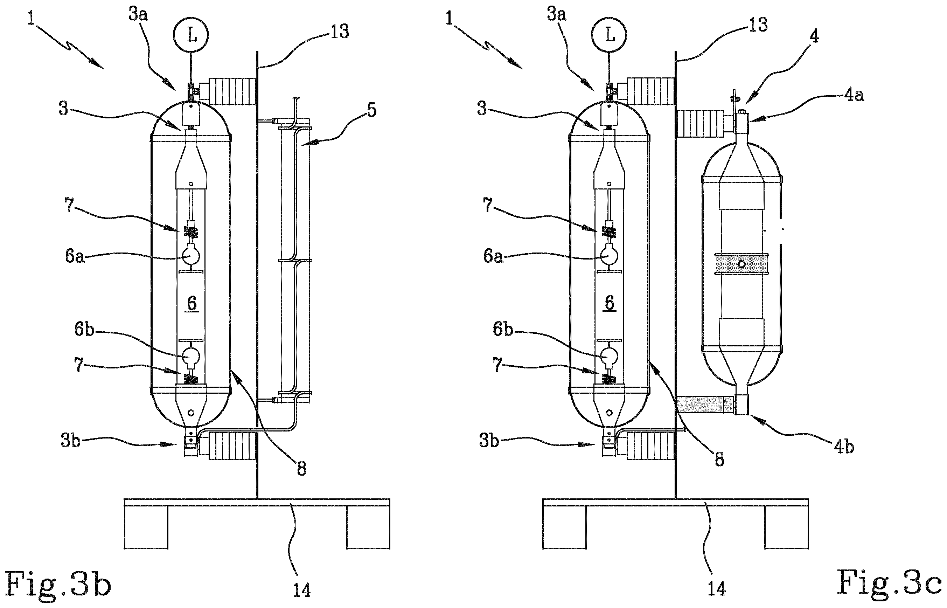

It should be noted that in each configuration, the damping devices 4 are made as described above and that the views thereof are in section according to a vertical plane. Therefore, the radiator 24 is visible in section (it is instead visible in side elevation, for example, in figure 3c), but it is in any case present.

The present invention further relates to a system 100 comprising:
- one or more electrodes 102 connected in junction to alternating current (polyphase and single-phase) or direct current power lines (electrical lines for energy transport);
- an apparatus 1 previously described, in which in alternating current each phase 102a, 102b, 102c is connected to a respective functional unit 2 and in which in direct current the line is connected to a functional unit 2.

An object of the present invention is also a method according to claim 17 for the prevention and damping of voltage and current peaks of external and internal origin for power lines. Such a method derives directly from the above disclosure which is incorporated below in its entirety. The method comprises, among others, the following operating steps:
- realising a passage of electrical signal (voltage) between two electrodes of a tuning device 3, connected to the power line, only when said signal has a frequency exceeding a predetermined threshold;
- dissipating the energy load of said signal through a damping device 4 connected on one side to the tuning device 3 and on the other to the metallic dorsal panel, which acts as an earth manifold (bar/node), the latter earth polarised by means of connection to the earthing system 101 of the cabin/station preferably by means of an interposed Antimpatto^{®} SCt earth block filter;
- realising a capacitive coupling between the tuning device 3 and the damping device 4 through a harmonising device 5 interposed therebetween;
- dissipating the energy load of said signal, preventing and damping voltage and current pulses with a steep front so as to achieve a prevention of the formation of said voltage and current peaks.

In other words, the method allows to prevent and dampen voltage and current peaks of internal and external origin to the power lines through the detection and transformation of electromagnetic energy at the origin of the overvoltages and overcurrents.

The present invention achieves the set objects.

The apparatus 1 object of the present invention allows to achieve a preventive protection of power lines both from external overvoltages and overcurrents, of atmospheric and terrestrial origin, and from internal overvoltages and overcurrents, produced by the operation of the same grid (due to manoeuvres and/or resonances in line - harmonics), with the intrinsic and exclusive ability to ensure anti-blackout safety.

In particular, the present invention, for its own unique quality, ensuring the fundamental waveform (free of overvoltages and overcurrents, harmonics and spurious emissions in general), allows to optimise both the quality of electricity, and energy efficiency.

In the context and at the same time, the present invention, always by its own peculiarity, eliminates or drastically mitigates the electromagnetic pollution produced by the transmission and distribution lines of electricity (as known, among the primary sources of electromagnetic pollution) acting for all the frequencies above the fundamental one (for example 50Hz).

In fact, the present invention allows the detection and transformation of electromagnetic energy at the origin of overvoltages and overcurrents in medium, high and very-high voltage electrical distribution lines.

In other words, the present invention cuts the "head" of the voltage pulse with a steep front (or of the high-frequency voltage half-wave), ensuring safety, absolute protection of the electrical systems, machinery and equipment constituting the power lines, with intrinsic and exclusive anti-blackout abilities.

Furthermore, the apparatus 1 adapts to the various working conditions comprising the most drastic ones, while preserving its intrinsic features of long duration and therefore operating in any voltage condition greater than that of regulation, therefore it is also adapted to protecting delicate electronic components ensuring safety in harmony with the eco-systems.

The apparatus 1 is reactive and therefore effective for the widest range of electromagnetic stresses of the electrical line to be protected to which it is electrically connected.

It should be noted that at nominal voltage, i.e., in a non-intervention condition, this newly designed apparatus 1 is of course not dissipative and therefore does not affect the efficiency of the line.

The apparatus 1 according to the present invention allows to effectively prevent, absorb, dampen and dissipate the electromagnetic stresses (in a wide frequency band, eminently of high frequency) which occur continuously in the atmosphere and in the subsoil, an accentuation of which leads to the achievement of stress levels of the medium until causing electromagnetic break-down.

In conclusion, the apparatus 1 object of the present invention does not discharge the overvoltages and overcurrents due to atmospheric and terrestrial causes to the earth, and the operation of medium, high and very-high voltage distribution lines, allowing the harmful direct and indirect effects to survive, such as the means used to date, but prevents the phenomena which originates the overvoltages and overcurrents by preventing, absorbing, damping and dissipating the energy load of the electromagnetic phenomena which cause them.

## Claims

1. An apparatus (1) for the prevention and damping of voltage and current peaks of internal and external origin with respect to power lines preferably at medium, high and very-high voltage, based on the detection and transformation of electromagnetic energy causing the overvoltages and overcurrents comprising:
at least one functional unit (2), in use, connected between a conductor of a power line and an earthing system (101) as described below, wherein
said functional unit (2) comprises in turn:
- a tuning device (3) comprising a pair of electrodes (3a), (3b) of which one input (3a), in use, connected to a phase of the power line for receiving an electrical signal, and one output (3b); said tuning device (3) being configured to realise a passage of said electrical signal between the two electrodes (3a), (3b) only when said electrical signal has a frequency exceeding a predetermined threshold;
- a damping device (4) connected to said output electrode (3b) of the tuning device (3) and configured to dissipate the energy load of said electrical signal; wherein an input electrode (4a) of said damping device (4) is coupled to said output electrode (3b) of the tuning device (3) through a harmonising device (5), while an output electrode (4b) of the damping device 4, in use, is earth polarised by means of connection to the earthing system (101);
wherein said damping device (4) has an electrically isolated internal volume (9) with respect to the external of the damping device (4) itself and comprising a mixture of an incoherent, non-hygroscopic sediment of particles of a piezoelectric, pyroelectric and refractory inert material; said damping device (4) comprising and having a metallic heat interception bar (11) partly immersed in said mixture, coupled to a heat dissipation collar made of metal which realises a radiator, and adapted to disperse the heat produced by said energy load towards the outside of the damping device (4) itself so that said functional unit (2) is configured to absorb, dampen and dissipate the energy load of said electrical signal at the origin of the voltage and current pulses with a steep front so as to achieve the prevention of the formation of said voltage and current peaks;
**characterised in that** the harmonising device (5) interposed between the tuning device (3) and the damping device (4) is configured to realise a capacitive coupling therebetween; said harmonising device (5) comprising a coiled conductor (5a) wound on a dielectric cylindrical support (5b).

2. The apparatus (1) according to claim 1, **characterised in that** said tuning device (3) is configured to allow the passage to the damping device (4) of frequencies of said electrical signal exceeding a predetermined threshold.

3. The apparatus (1) according to any one of the preceding claims, **characterised in that** said tuning device (3) has an internal volume (6) interposed between the two electrodes (3a), (3b) wherein a means is present comprising an incoherent, non-hygroscopic sediment of particles of a piezoelectric and pyroelectric material in air and in the form of suspension during use; said tuning device (3) comprising means for adjusting the separating distance between said electrodes as a function of the nominal operating voltage of the power line.

4. The apparatus (1) according to any one of the preceding claims, **characterised in that** said incoherent sediment of which the mixture is composed which is inserted in the internal volume (9) of the damping device (4) comprises a semiconductor.

5. The apparatus (1) according to any one of the preceding claims, **characterised in that** it comprises three functional units (2) arranged so that the input electrode (3a) of each tuning device (3) is respectively connected to a phase of the power line and the output electrode (4b) of each damping device (4) is earth polarised by means of connection to the earthing system (101).

6. The apparatus (1) according to any one of the preceding claims, **characterised in that** it comprises six functional units (2) connected in parallel with each other two by two so that the input electrodes (3a) of two tuning devices (3) are connected to a same phase and not to the others.

7. The apparatus (1) according to any one of the preceding claims, **characterised in that** it comprises at least one earth block filter (15) with strong radio frequency impedance connected between each output electrode of the damping devices (4) and said earthing system (101), and exceptionally dedicated to the earthing circuit with strong radio frequency impedance.

8. The apparatus (1) according to any one of the preceding claims, **characterised in that** it comprises a support structure (12) of said one or more functional units (2) having a dorsal panel (13), wherein said tuning device (3) and said damping device (4) are arranged on opposite sides of the dorsal panel (13).

9. The apparatus (1) according to claim 8, wherein said dorsal panel (13) has a plurality of through holes through which the connection of the tuning device (3) to the damping device (4) is realised.

10. The apparatus (1) according to one of claims 8 to 9, wherein said dorsal panel (13) is made of electrically conductive material so as to act as an earth manifold and earth polarised by means of connection to the earthing system (101); said input electrode (3a) and said output electrode (3b) of the tuning device (3) being isolated from said dorsal panel (13).

11. The apparatus (1) according to one of claims 8 to 10, wherein said input electrode (4a) of the damping device (4) is isolated from said dorsal panel (13); said output electrode (4b) of the damping device (4) is metallically connected to said dorsal panel (13) so as to realise an electromechanical interconnection.

12. The apparatus (1) according to one of claims 8 to 11 when dependant on claim 7, wherein said earth block filter (15) is interposed and connected between said dorsal panel (13) and said earthing system (101).

13. The apparatus (1) according to one of claims 8 to 12, wherein said support structure (12) comprises a base panel (14) connected orthogonally with respect to the dorsal panel (13) so as to form a substantially inverted "T" structure.

14. Apparatus (1) according to one of claims from 8 to 13 **characterised by** comprising a plurality of dorsal panels (13) wherein each functional unit (2) is mounted on a respective dorsal panel (13) separated from the others so as to obtain at least three dorsal panels (13a, 13b, 13c) separated from each other and arranged side by side.

15. Apparatus (1) according to any one of claims from 8 to 13 **characterised by** comprising a plurality of dorsal panels (13) and a plurality of functional units (2), wherein the tuning devices (3) of said functional units (2) are mounted on a single common dorsal panel (13d) and separated from another single dorsal panel (13e) on which the damping devices (4) of said functional units (2) are mounted so as to obtain two dorsal panels (13d, 13e) separated from each other.

16. A system (100) comprising:
- one or more electrodes (102) connected in junction to alternating current or direct current power lines;
- an apparatus (1) according to any one of the preceding claims, wherein in alternating current each phase (102a, 102b, 102c) is connected to a respective functional unit (2) and wherein in direct current the line is connected to at least one functional unit (2).

17. A prevention and damping method of voltage and current peaks of internal and external origin with respect to power lines, preferably at medium, high and very-high voltage, comprising the following operating steps:
- realising a passage of electrical signal between two electrodes of a tuning device (3), connected to the power line, only when said electrical signal has a frequency exceeding a predetermined threshold;
- dissipating the energy load of said electrical signal through a damping device (4) connected on one side to the tuning device (3) and on the other side to the earthing system (101);
- wherein the step of dissipating the energy load is achieved through an internal volume (9) of the damping device (4) which is electrically isolated with respect to the external of the damping device (4) itself and comprising a mixture of an incoherent, non-hygroscopic sediment of particles of a piezoelectric, pyroelectric and refractory inert material; said step of dissipating the energy load also being carried out by means of a metallic heat interception bar (11) partially immersed in said mixture, coupled to a heat dissipation collar made of metal which defines a radiator, and adapted to disperse the heat produced by said energy load towards the outside of the damping device (4) itself so as the energy load of said electrical signal at the origin of the voltage and current pulses with a steep front to be absorbed, damped and dissipated to prevent the formation of said voltage and current peaks of external and internal origin to the power lines by detecting and transforming the electromagnetic energy at the origin of overvoltages and overcurrents;
**characterised in that** it comprises an operating step which involves realising a capacitive coupling between the tuning device (3) and the damping device (4) through a harmonising device (5) interposed therebetween in which said harmonising device (5) comprises a coiled conductor (5a) wound on a dielectric cylindrical support.

18. The method according to claim 17, **characterised in that** the operating steps of realising the passage of electrical signal and dissipating the energy load of said electrical signal are realised so as to:
- ensure the fundamental waveform of the power line by eliminating overvoltages and overcurrents, harmonics and spurious emissions in general, allowing both the quality of electricity and energy efficiency to be optimised;
- eliminate or drastically mitigate the electromagnetic pollution produced by the power lines by acting for all frequencies exceeding that of the fundamental.

19. The method according to one of claims 17 or 18, **characterised in that** it comprises an operating step which involves realising a capacitive coupling between the tuning device (3) and the damping device (4) through a harmonising device (5) interposed therebetween.

## Patentansprüche

1. Vorrichtung (1) zur Verhinderung und Dämpfung von Spannungs- und Stromspitzen interner und externer Herkunft in Bezug auf Stromleitungen vorzugsweise bei Mittel-, Hoch- und Höchstspannung, basierend auf der Erfassung und Umwandlung von elektromagnetischer Energie, die die Überspannungen und Überströme verursacht, umfassend:
mindestens eine Funktionseinheit (2), die im Gebrauch zwischen einem Leiter einer Stromleitung und einem Erdungssystem (101) wie unten beschrieben verbunden ist,
wobei die Funktionseinheit (2) wiederum Folgendes umfasst:
- eine Abstimmeinrichtung (3), die ein Paar Elektroden (3a), (3b), von denen ein Eingang (3a) im Gebrauch mit einer Phase der Stromleitung zum Empfangen eines elektrischen Signals verbunden ist, und einen Ausgang (3b) umfasst; wobei die Abstimmeinrichtung (3) dazu ausgelegt ist, einen Durchgang des elektrischen Signals zwischen den beiden Elektroden (3a), (3b) nur dann zu realisieren, wenn das elektrische Signal eine Frequenz aufweist, die einen vorbestimmten Schwellenwert überschreitet;
- eine Dämpfungseinrichtung (4), die mit der Ausgangselektrode (3b) der Abstimmeinrichtung (3) verbunden und ausgelegt ist, um die Energiebelastung des elektrischen Signals abzuleiten; wobei eine Eingangselektrode (4a) der Dämpfungseinrichtung (4) über eine Harmonisierungseinrichtung (5) mit der Ausgangselektrode (3b) der Abstimmeinrichtung (3) gekoppelt ist, während eine Ausgangselektrode (4b) der Dämpfungseinrichtung (4) im Gebrauch mittels einer Verbindung mit dem Erdungssystem (101) erdpolarisiert ist;
wobei die Dämpfungseinrichtung (4) ein elektrisch isoliertes Innenvolumen (9) in Bezug auf das Äußere der Dämpfungseinrichtung (4) selbst aufweist und eine Mischung aus einem inkohärenten, nicht hygroskopischen Sediment von Partikeln eines piezoelektrischen, pyroelektrischen und feuerfesten inerten Materials umfasst; wobei die Dämpfungseinrichtung (4) einen metallischen Wärmeabfangstab (11) umfasst und aufweist, der teilweise in das Gemisch eingetaucht ist, mit einem Wärmeableitungskragen aus Metall gekoppelt ist, der einen Kühler realisiert, und geeignet ist, um die durch die Energiebelastung produzierte Wärme nach außen der Dämpfungseinrichtung (4) selbst zu verteilen, so dass die Funktionseinheit (2) ausgelegt ist, um die Energiebelastung des elektrischen Signals an der Herkunft der Spannungs- und Stromimpulse mit einer steilen Front zu absorbieren, zu dämpfen und abzuleiten, um die Verhinderung der Bildung der Spannungs- und Stromspitzen zu erreichen;
**dadurch gekennzeichnet, dass** die Harmonisierungseinrichtung (5), die zwischen der Abstimmeinrichtung (3) und der Dämpfungseinrichtung (4) angeordnet ist, ausgelegt ist, um eine kapazitive Kopplung dazwischen zu realisieren; wobei die Harmonisierungseinrichtung (5) einen gewickelten Leiter (5a) umfasst, der auf einen dielektrischen zylindrischen Träger (5b) gewickelt ist.

2. Vorrichtung (1) nach Anspruch 1, **dadurch gekennzeichnet, dass** die Abstimmeinrichtung (3) dazu ausgelegt ist, den Durchgang von Frequenzen des elektrischen Signals, die einen vorbestimmten Schwellenwert überschreiten, zu der Dämpfungseinrichtung (4) zu ermöglichen.

3. Vorrichtung (1) nach einem der vorhergehenden Ansprüche, **dadurch gekennzeichnet, dass** die Abstimmeinrichtung (3) ein Innenvolumen (6) aufweist, das zwischen den beiden Elektroden (3a), (3b) angeordnet ist, wobei ein Mittel vorhanden ist, das ein inkohärentes, nicht hygroskopisches Sediment von Partikeln eines piezoelektrischen und pyroelektrischen Materials in Luft und in Form einer Suspension während des Gebrauchs umfasst; wobei die Abstimmeinrichtung (3) Mittel zum Einstellen des Trennungsabstands zwischen den Elektroden als Funktion der Nennbetriebsspannung der Stromleitung umfasst.

4. Vorrichtung (1) nach einem der vorhergehenden Ansprüche, **dadurch gekennzeichnet, dass** das inkohärente Sediment, aus dem das Gemisch zusammengesetzt ist, das in das Innenvolumen (9) der Dämpfungseinrichtung (4) eingebracht ist, einen Halbleiter umfasst.

5. Vorrichtung (1) nach einem der vorhergehenden Ansprüche, **dadurch gekennzeichnet, dass** sie drei Funktionseinheiten (2) umfasst, die so angeordnet sind, dass die Eingangselektrode (3a) jeder Abstimmeinrichtung (3) jeweils mit einer Phase der Stromleitung verbunden ist und die Ausgangselektrode (4b) jeder Dämpfungseinrichtung (4) mittels der Verbindung mit dem Erdungssystem (101) erdpolarisiert ist.

6. Vorrichtung (1) nach einem der vorhergehenden Ansprüche, **dadurch gekennzeichnet, dass** sie sechs Funktionseinheiten (2) umfasst, die zu zweit parallel zueinander geschaltet sind, so dass die Eingangselektroden (3a) von zwei Abstimmeinrichtungen (3) mit derselben Phase und nicht mit den anderen verbunden sind.

7. Vorrichtung (1) nach einem der vorhergehenden Ansprüche, **dadurch gekennzeichnet, dass** sie mindestens ein Erdungsblockfilter (15) mit starker Hochfrequenzimpedanz umfasst, das zwischen jeder Ausgangselektrode der Dämpfungseinrichtungen (4) und dem Erdungssystem (101) verbunden ist und ausnahmsweise der Erdungsschaltung mit starker Hochfrequenzimpedanz gewidmet ist.

8. Vorrichtung (1) nach einem der vorhergehenden Ansprüche, **dadurch gekennzeichnet, dass** sie eine Trägerstruktur (12) der einen oder mehreren Funktionseinheiten (2) mit einer Rückenplatte (13) umfasst, wobei die Abstimmeinrichtung (3) und die Dämpfungseinrichtung (4) auf gegenüberliegenden Seiten der Rückenplatte (13) angeordnet sind.

9. Vorrichtung (1) nach Anspruch 8, wobei die Rückenplatte (13) eine Vielzahl von Durchgangslöchern aufweist, durch die die Verbindung der Abstimmeinrichtung (3) mit der Dämpfungseinrichtung (4) realisiert ist.

10. Vorrichtung (1) nach einem der Ansprüche 8 bis 9, wobei die Rückenplatte (13) aus elektrisch leitendem Material hergestellt ist, so dass sie als Erdverteiler wirkt und mittels der Verbindung mit dem Erdungssystem (101) erdpolarisiert ist; wobei die Eingangselektrode (3a) und die Ausgangselektrode (3b) der Abstimmeinrichtung (3) von der Rückenplatte (13) isoliert sind.

11. Vorrichtung (1) nach einem der Ansprüche 8 bis 10, wobei die Eingangselektrode (4a) der Dämpfungseinrichtung (4) von der Rückenplatte (13) isoliert ist; wobei die Ausgangselektrode (4b) der Dämpfungseinrichtung (4) metallisch mit der Rückenplatte (13) verbunden ist, um eine elektromechanische Verbindung zu realisieren.

12. Vorrichtung (1) nach einem der Ansprüche 8 bis 11, wenn abhängig von Anspruch 7, wobei der Erdungsblockfilter (15) zwischen der Rückenplatte (13) und dem Erdungssystem (101) angeordnet und damit verbunden ist.

13. Vorrichtung (1) nach einem der Ansprüche 8 bis 12, wobei die Trägerstruktur (12) eine Basisplatte (14) umfasst, die orthogonal in Bezug auf die Rückenplatte (13) verbunden ist, um eine im Wesentlichen umgekehrte "T" -Struktur zu bilden.

14. Vorrichtung (1) nach einem der Ansprüche 8 bis 13, **dadurch gekennzeichnet, dass** sie eine Vielzahl von Rückenplatten (13) umfasst, wobei eine jede Funktionseinheit (2) an einer jeweiligen Rückenplatte (13) montiert ist, die von den anderen getrennt ist, um mindestens drei Rückenplatten (13a, 13b, 13c) zu erhalten, die voneinander getrennt und nebeneinander angeordnet sind.

15. Vorrichtung (1) nach einem der Ansprüche 8 bis 13, **dadurch gekennzeichnet, dass** sie eine Vielzahl von Rückenplatten (13) und eine Vielzahl von Funktionseinheiten (2) umfasst, wobei die Abstimmeinrichtungen (3) der Funktionseinheiten (2) an einer einzigen gemeinsamen Rückenplatte (13d) montiert und von einer anderen einzigen Rückenplatte (13e) getrennt sind, an der die Dämpfungseinrichtungen (4) der Funktionseinheiten (2) montiert sind, um zwei voneinander getrennte Rückenplatten (13d, 13e) zu erhalten.

16. System (100), umfassend:
- eine oder mehrere Elektroden (102), die durch Schaltung mit Wechselstrom- oder Gleichstrom-Stromleitungen verbunden sind;
- eine Vorrichtung (1) nach einem der vorhergehenden Ansprüche, wobei bei Wechselstrom eine jede Phase (102a, 102b, 102c) mit einer jeweiligen Funktionseinheit (2) verbunden ist und wobei bei Gleichstrom die Leitung mit mindestens einer Funktionseinheit (2) verbunden ist.

17. Verfahren für die Verhinderung und Dämpfung von Spannungs- und Stromspitzen interner und externer Herkunft in Bezug auf Stromleitungen, vorzugsweise bei Mittel-, Hoch- und Höchstspannung, umfassend die folgenden Betriebsschritte:
- Realisieren eines Durchgangs eines elektrischen Signals zwischen zwei Elektroden einer Abstimmeinrichtung (3), die mit der Stromleitung verbunden ist, nur dann, wenn das elektrische Signal eine Frequenz aufweist, die einen vorbestimmten Schwellenwert überschreitet;
- Ableiten der Energiebelastung des elektrischen Signals durch eine Dämpfungseinrichtung (4), die auf einer Seite mit der Abstimmeinrichtung (3) und auf der anderen Seite mit dem Erdungssystem (101) verbunden ist;
- wobei der Schritt zum Ableiten der Energiebelastung durch ein Innenvolumen (9) der Dämpfungseinrichtung (4) erreicht wird, das in Bezug auf das Äußere der Dämpfungseinrichtung (4) selbst elektrisch isoliert ist und ein Gemisch aus einem inkohärenten, nicht hygroskopischen Sediment von Partikeln eines piezoelektrischen, pyroelektrischen und feuerfesten inerten Materials umfasst; wobei der Schritt zum Ableiten der Energiebelastung auch mittels eines metallischen Wärmeabfangstabs (11) durchgeführt wird, der teilweise in das Gemisch eingetaucht ist, mit einem Wärmeableitungskragen aus Metall gekoppelt ist, der einen Kühler definiert, und geeignet ist, um die von der Energiebelastung produzierte Wärme nach außen der Dämpfungseinrichtung (4) selbst zu verteilen, so dass die Energiebelastung des elektrischen Signals an der Herkunft der Spannungs- und Stromimpulse mit einer steilen Front absorbiert, gedämpft und abgeleitet wird, um die Bildung der Spannungs- und Stromspitzen externer und interner Herkunft zu den Stromleitungen zu verhindern, indem die elektromagnetische Energie an der Herkunft von Überspannungen und Überströmen erfasst und transformiert wird;
**dadurch gekennzeichnet, dass** es einen Betriebsschritt umfasst, bei dem eine kapazitive Kopplung zwischen der Abstimmeinrichtung (3) und der Dämpfungseinrichtung (4) durch eine dazwischen angeordnete Harmonisierungseinrichtung (5) realisiert wird, wobei die Harmonisierungseinrichtung (5) einen gewickelten Leiter (5a) umfasst, der auf einen dielektrischen zylindrischen Träger gewickelt ist.

18. Verfahren nach Anspruch 17, **dadurch gekennzeichnet, dass** die Betriebsschritte zum Realisieren des Durchgangs des elektrischen Signals und zum Ableiten der Energiebelastung des elektrischen Signals so realisiert werden, dass:
- die Grundwellenform der Stromleitung durch Beseitigung von Überspannungen und Überströmen, Oberschwingungen und Störaussendungen im Allgemeinen sichergestellt wird, indem sowohl die Stromqualität als auch die Energieeffizienz optimiert werden können;
- die elektromagnetische Verschmutzung, die durch die Stromleitungen produziert wird, beseitigt oder drastisch gemildert wird, indem für alle Frequenzen, die der Grundfrequenz überschreiten, gehandelt wird.

19. Verfahren nach einem der Ansprüche 17 oder 18, **dadurch gekennzeichnet, dass** es einen Betriebsschritt umfasst, bei dem eine kapazitive Kopplung zwischen der Abstimmeinrichtung (3) und der Dämpfungseinrichtung (4) durch eine dazwischen angeordnete Harmonisierungseinrichtung (5) realisiert wird.

## Revendications

1. Appareil (1) pour la prévention et l'amortissement des pics de tension et de courant d'origine interne et externe concernant les lignes électriques de préférence à moyenne, haute et très haute tension, basé sur la détection et la transformation de l'énergie électromagnétique provoquant les surtensions et les surintensités, comprenant :
au moins une unité fonctionnelle (2), lors de l'utilisation, connectée entre un conducteur d'une ligne électrique et un système de mise à la terre (101) tel que décrit ci-dessous, dans lequel ladite unité fonctionnelle (2) comprend à son tour :
- un dispositif de syntonisation (3) comprenant une paire d'électrodes (3a), (3b) dont une entrée (3a), lors de l'utilisation, est connectée à une phase de la ligne électrique pour recevoir un signal électrique, et une sortie (3b) ; ledit dispositif de syntonisation (3) étant configuré pour réaliser un passage dudit signal électrique entre les deux électrodes (3a), (3b) uniquement lorsque ledit signal électrique a une fréquence dépassant un seuil prédéterminé ;
- un dispositif d'amortissement (4) connecté à ladite électrode de sortie (3b) du dispositif de syntonisation (3) et configuré pour dissiper la charge énergétique dudit signal électrique ; dans lequel une électrode d'entrée (4a) dudit dispositif d'amortissement (4) est couplée à ladite électrode de sortie (3b) du dispositif de syntonisation (3) par l'intermédiaire d'un dispositif d'harmonisation (5), tandis qu'une électrode de sortie (4b) du dispositif d'amortissement (4), lors de l'utilisation, est polarisée à la terre au moyen d'une connexion au système de mise à la terre (101) ;
dans lequel ledit dispositif d'amortissement (4) présente un volume interne (9) isolé électriquement par rapport à l'extérieur du dispositif d'amortissement (4) lui-même et comprenant un mélange d'un sédiment incohérent et non hygroscopique de particules d'un matériau inerte piézoélectrique, pyroélectrique et réfractaire ; ledit dispositif d'amortissement (4) comprenant et comportant une barre métallique d'interception de chaleur (11) partiellement immergée dans ledit mélange, couplée à un collier de dissipation de chaleur en métal qui réalise un radiateur, et adaptée pour disperser la chaleur produite par ladite charge énergétique vers l'extérieur du dispositif d'amortissement (4) lui-même de sorte que ladite unité fonctionnelle (2) est configurée pour absorber, amortir et dissiper la charge énergétique dudit signal électrique à l'origine des impulsions de tension et de courant à front raide de manière à obtenir la prévention de la formation desdits pics de tension et de courant ;
**caractérisé en ce que** le dispositif d'harmonisation (5) interposé entre le dispositif de syntonisation (3) et le dispositif d'amortissement (4) est configuré pour réaliser un couplage capacitif entre eux ; ledit dispositif d'harmonisation (5) comprenant un conducteur spiralé (5a) enroulé sur un support cylindrique diélectrique (5b).

2. Appareil (1) selon la revendication 1, **caractérisé en ce que** ledit dispositif de syntonisation (3) est configuré pour permettre le passage vers le dispositif d'amortissement (4) des fréquences dudit signal électrique dépassant un seuil prédéterminé.

3. Appareil (1) selon l'une quelconque des revendications précédentes, **caractérisé en ce que** ledit dispositif de syntonisation (3) présente un volume interne (6) interposé entre les deux électrodes (3a), (3b), dans lequel sont présents des moyens comprenant un sédiment incohérent et non hygroscopique de particules d'un matériau piézoélectrique et pyroélectrique dans l'air et sous forme de suspension lors de l'utilisation ; ledit dispositif de syntonisation (3) comprenant des moyens de réglage de la distance de séparation entre lesdites électrodes en fonction de la tension nominale de fonctionnement de la ligne électrique.

4. Appareil (1) selon l'une quelconque des revendications précédentes, **caractérisé en ce que** ledit sédiment incohérent dont est composé le mélange qui est introduit dans le volume interne (9) du dispositif d'amortissement (4) comprend un semi-conducteur.

5. Appareil (1) selon l'une quelconque des revendications précédentes, **caractérisé en ce qu'**il comprend trois unités fonctionnelles (2) disposées de telle sorte que l'électrode d'entrée (3a) de chaque dispositif de syntonisation (3) soit respectivement connectée à une phase de la ligne électrique et que l'électrode de sortie (4b) de chaque dispositif d'amortissement (4) soit polarisée à la terre au moyen d'une connexion au système de mise à la terre (101).

6. Appareil (1) selon l'une quelconque des revendications précédentes, **caractérisé en ce qu'**il comprend six unités fonctionnelles (2) connectées en parallèle deux à deux de sorte que les électrodes d'entrée (3a) de deux dispositifs de syntonisation (3) sont connectées à une même phase et non aux autres.

7. Appareil (1) selon l'une quelconque des revendications précédentes, **caractérisé en ce qu'**il comprend au moins un filtre de blocage de mise à la terre (15) à forte impédance aux radiofréquences connecté entre chaque électrode de sortie des dispositifs d'amortissement (4) et ledit système de mise à la terre (101), et exceptionnellement dédié au circuit de mise à la terre à forte impédance aux radiofréquences.

8. Appareil (1) selon l'une quelconque des revendications précédentes, **caractérisé en ce qu'**il comprend une structure de support (12) de ladite ou desdites unités fonctionnelles (2) comportant un panneau dorsal (13), dans lequel ledit dispositif de syntonisation (3) et ledit dispositif d'amortissement (4) sont disposés sur les côtés opposés du panneau dorsal (13).

9. Appareil (1) selon la revendication 8, dans lequel ledit panneau dorsal (13) comporte une pluralité de trous traversants à travers lesquels est réalisée la connexion du dispositif de syntonisation (3) au dispositif d'amortissement (4).

10. Appareil (1) selon l'une des revendications 8 à **9,** dans lequel ledit panneau dorsal (13) est constitué d'un matériau électriquement conducteur de manière à agir comme un collecteur de terre et polarisé à la terre au moyen d'une connexion au système de mise à la terre (101) ; ladite électrode d'entrée (3a) et ladite électrode de sortie (3b) du dispositif de syntonisation (3) étant isolées dudit panneau dorsal (13).

11. Appareil (1) selon l'une des revendications 8 à 10, dans lequel ladite électrode d'entrée (4a) du dispositif d'amortissement (4) est isolée dudit panneau dorsal (13) ; ladite électrode de sortie (4b) du dispositif d'amortissement (4) est reliée de façon métallique audit panneau dorsal (13) de manière à réaliser une interconnexion électromécanique.

12. Appareil (1) selon l'une des revendications 8 à 11 lorsqu'il dépend de la revendication 7, dans lequel ledit filtre de blocage de mise à la terre (15) est interposé et connecté entre ledit panneau dorsal (13) et ledit système de mise à la terre (101).

13. Appareil (1) selon l'une des revendications 8 à 12, dans lequel ladite structure de support (12) comprend un panneau de base (14) relié orthogonalement au panneau dorsal (13) de manière à former une structure en « T » sensiblement inversée.

14. Appareil (1) selon l'une des revendications de 8 à 13, **caractérisé en ce qu'**il comprend une pluralité de panneaux dorsaux (13), dans lequel chaque unité fonctionnelle (2) est montée sur un panneau dorsal (13) respectif séparé des autres de manière à obtenir au moins trois panneaux dorsaux (13a, 13b, 13c) séparés les uns des autres et disposés côte à côte.

15. Appareil (1) selon l'une quelconque des revendications 8 à 13, **caractérisé en ce qu'**il comprend une pluralité de panneaux dorsaux (13) et une pluralité d'unités fonctionnelles (2), dans lequel les dispositifs de syntonisation (3) desdites unités fonctionnelles (2) sont montés sur un seul panneau dorsal commun (13d) et séparés d'un autre panneau dorsal unique (13e) sur lequel sont montés les dispositifs d'amortissement (4) desdites unités fonctionnelles (2) de manière à obtenir deux panneaux dorsaux (13d, 13e) séparés l'un de l'autre.

16. Système (100), comprenant :
- une ou plusieurs électrodes (102) connectées en jonction à des lignes électriques à courant alternatif ou à courant continu ;
- un appareil (1) selon l'une quelconque des revendications précédentes, dans lequel, en courant alternatif, chaque phase (102a, 102b, 102c) est connectée à une unité fonctionnelle (2) respective et dans lequel, en courant continu, la ligne est connectée à au moins une unité fonctionnelle (2).

17. Procédé pour la prévention et l'amortissement des pics de tension et de courant d'origine interne et externe concernant les lignes électriques, de préférence à moyenne, haute et très haute tension, comprenant les étapes opérationnelles suivantes :
- réaliser un passage de signal électrique entre deux électrodes d'un dispositif de syntonisation (3), connecté à la ligne électrique, uniquement lorsque ledit signal électrique a une fréquence excédant un seuil prédéterminé ;
- dissiper la charge énergétique dudit signal électrique à travers un dispositif d'amortissement (4) connecté d'un côté au dispositif de syntonisation (3) et de l'autre côté au système de mise à la terre (101) ;
- dans lequel l'étape de dissipation de la charge énergétique est accomplie à travers un volume interne (9) du dispositif d'amortissement (4) qui est électriquement isolé par rapport à l'extérieur du dispositif d'amortissement (4) lui-même et comprenant un mélange d'un sédiment incohérent et non hygroscopique de particules d'un matériau inerte piézoélectrique, pyroélectrique et réfractaire ; ladite étape de dissipation de la charge énergétique étant également réalisée au moyen d'une barre métallique d'interception de chaleur (11) partiellement immergée dans ledit mélange, couplée à un collier de dissipation de chaleur en métal qui définit un radiateur, et adaptée pour disperser la chaleur produite par ladite charge énergétique vers l'extérieur du dispositif d'amortissement (4) lui-même de manière à absorber la charge énergétique dudit signal électrique à l'origine des impulsions de tension et de courant à front raide, à absorber, amortir et dissiper pour prévenir la formation de ces pics de tension et de courant d'origine externe et interne aux lignes électriques en détectant et en transformant l'énergie électromagnétique à l'origine des surtensions et des surintensités ;
**caractérisé en ce qu'**il comprend une étape opérationnelle qui implique la réalisation d'un couplage capacitif entre le dispositif de syntonisation (3) et le dispositif d'amortissement (4) à travers un dispositif d'harmonisation (5) interposé entre eux dans lequel ledit dispositif d'harmonisation (5) comprend un conducteur spiralé (5a) enroulé sur un support cylindrique diélectrique.

18. Procédé selon la revendication 17, **caractérisé en ce que** les étapes opérationnelles consistant à réaliser le passage du signal électrique et de dissipation de la charge énergétique dudit signal électrique sont réalisées de manière à :
- garantir la forme d'onde fondamentale de la ligne électrique en éliminant les surtensions et les surintensités, les harmoniques et les émissions parasites en général, en permettant d'optimiser à la fois la qualité de l'électricité et l'efficacité énergétique ;
- éliminer ou atténuer fortement la pollution électromagnétique produite par les lignes électriques en agissant sur toutes les fréquences excédant la fréquence fondamentale.

19. Procédé selon l'une des revendications 17 ou 18, **caractérisé en ce qu'**il comprend une étape opérationnelle qui implique la réalisation d'un couplage capacitif entre le dispositif de syntonisation (3) et le dispositif d'amortissement (4) à travers un dispositif d'harmonisation (5) interposé entre eux.
